# FASCICULE DE BREVET EUROPEEN

(11) **EP 2 989 141 B1**
(45) Date de publication et mention de la délivrance du brevet: **07.11.2018**
(21) Numéro de dépôt: 14721269.0
(22) Date de dépôt: 18.04.2014
(51) Int. Cl.: C08G 18/76, C08G 18/67, C08G 18/38, C08G 18/34, C09J 175/04, C08G 18/80, C09D 5/08, C09J 175/14

(54) **POLYMÈRE À UNITÉS URÉTHANE OU THIOURÉTHANE UTILISABLE NOTAMMENT COMME PRIMAIRE D'ADHESION POUR LE COLLAGE DE METAL A DU CAOUTCHOUC**
POLYMERE MIT URETHAN- ODER THIOURETHAN-EINHEITEN, BESONDERS EINSETZBAR ALS KLEBEGRUNDIERUNG FÜR DAS KLEBEN VON METALL AN KAUTSCHUK
POLYMERS HAVING URETHANE OR THIOURETHANE UNITS, PARTICULARLY USABLE AS ADHESIVE PRIMER FOR ADHERING METAL TO RUBBER

(30) Priorité: 26.04.2013 FR 1353813
(43) Date de publication de la demande: 02.03.2016
(73) Titulaire: Compagnie Générale des Etablissements Michelin, 63000 Clermont-Ferrand (FR)
(72) Inventeur: FEDURCO, Milan, F-63040 Clermont-Ferrand Cedex 9 (FR); RIBEZZO, Marco, F-63040 Clermont-Ferrand Cedex 9 (FR); DELFINO, Antonio, F-63040 Clermont-Ferrand Cedex 9 (FR)
(74) Mandataire: Desbordes, Guillaume
(86) Numéro de dépôt international: PCT/EP2014/057998
(87) Numéro de publication internationale: WO 2014/173838

(56) Documents cités:
- FR-A- 1 322 416
- FR-A1- 2 872 820
- US-A- 2 846 416
- US-A1- 2009 012 258

## Description

### 1. DOMAINE DE L'INVENTION

La présente invention est relative aux polymères à unités uréthane ou thiouréthane, utilisables notamment dans les systèmes adhésifs destinés en particulier au collage de métal ou de verre à du caoutchouc.

Elle est plus particulièrement relative à de tels polymères utilisables comme primaires d'adhésion dans les composites métal / caoutchouc destinés à la fabrication d'articles en caoutchouc tels que des pneumatiques.

### 2. ETAT DE LA TECHNIQUE

Les composites métal / caoutchouc, en particulier pour pneumatiques, sont bien connus. Ils sont généralement constitués d'une matrice en caoutchouc insaturé généralement diénique, réticulable au soufre, comportant des éléments de renforcement (ou « renforts ») métalliques tels que des fils, films ou câbles en acier au carbone.

Soumis à des contraintes très importantes lors du roulage des pneumatiques, notamment à des compressions, flexions ou variations de courbure répétées, ces composites doivent de manière connue satisfaire à un grand nombre de critères techniques, parfois contradictoires, tels qu'uniformité, flexibilité, endurance en flexion et en compression, résistance à la traction, à l'usure et à la corrosion, et maintenir ces performances à un niveau très élevé aussi longtemps que possible.

On comprend aisément que l'interphase adhésive entre caoutchouc et renforts joue un rôle prépondérant dans la pérennité de ces performances. Le procédé traditionnel pour relier les compositions de caoutchouc à de l'acier au carbone consiste à revêtir la surface de l'acier avec du laiton (alliage cuivre-zinc), la liaison entre l'acier et la matrice de caoutchouc étant assurée par sulfuration du laiton lors de la vulcanisation ou cuisson du caoutchouc. Pour améliorer l'adhésion, on utilise en outre généralement, dans ces compositions de caoutchouc, des sels organiques ou des complexes de métal tels que des sels de cobalt, en tant qu'additifs promoteurs d'adhésion.

On se reportera notamment, pour illustrer cet état de la technique général, à la publication RCT (Rubber Chemistry and Technology), vol. 78, pp 426-457, auteur W. Stephen Fulton, intitulée « Steel tire cord-rubber adhésion, including the contribution of cobalt ».

L'état de la technique relatif aux polyuréthanes est notamment constitué par le document FR 2 872 820 qui a décrit une composition adhésive utilisable comme primaire d'adhésion dans un procédé de collage de polyuréthane, par ailleurs tout à fait conventionnel, à du caoutchouc à l'état cru, en d'autre termes utilisable pour le collage d'un polymère à un autre polymère. Ce primaire d'adhésion a pour caractéristique d'être à base d'un composé polyisocyanate et d'une résine polyester et vinylester comportant des groupes fonctionnels, notamment hydroxyle, réactifs vis-à-vis des groupes isocyanate dudit polyisocyanate.

Le polymère de la présente invention, à unités uréthane ou thiouréthane, est destiné quant à lui à faire coller du métal à du caoutchouc ; sa caractéristique essentielle est de comporter, outre les unités de base, par exemple les unités uréthane conventionnelles telles que présentes notamment dans le polyuréthane décrit dans le document FR 2 872 820 précité, des unités additionnelles, non décrites quant à elles dans FR 2 872 820, qui comportent au moins d'une part une fonction alcool secondaire, d'autre part une fonction thioéther en position alpha de cette fonction alcool.

Or, on sait que l'adhésion entre l'acier au carbone et la matrice de caoutchouc est susceptible de s'affaiblir au cours du temps, du fait de l'évolution progressive des sulfures formés sous l'effet des différentes sollicitations rencontrées, notamment mécaniques et/ou thermiques, le processus de dégradation ci-dessus pouvant être accéléré en présence d'humidité.

D'autre part, l'utilisation de sels de cobalt rend les compositions de caoutchouc plus sensibles à l'oxydation et au vieillissement, et en augmente significativement le coût, sans compter qu'il est souhaitable de supprimer à terme l'emploi de tels sels de cobalt dans les compositions de caoutchouc, en raison de l'évolution récente de la réglementation européenne sur ce type de sels métalliques.

Pour toutes les raisons exposées ci-dessus, les fabricants de composites métal / caoutchouc, en particulier les manufacturiers de pneumatiques, sont à la recherche de solutions adhésives nouvelles pour faire coller les renforts métalliques aux compositions de caoutchouc, tout en palliant, au moins en partie, les inconvénients précités.

### 3. BREVE DESCRIPTION DE L'INVENTION

Or, au cours de leurs recherches, les Demanderesses ont trouvé un polymère nouveau du type à unités uréthane ou thiouréthane, de formule spécifique, qui répond à un tel objectif.

En conséquence, l'invention concerne un polymère à unités uréthane ou thiouréthane, utilisable notamment comme primaire d'adhésion pour le collage de métal ou de verre à un caoutchouc insaturé, comportant au moins, d'une part des unités de base comportant au moins un motif de formule - X₁ - CO - NH - dans laquelle X₁ représente respectivement O ou S, et d'autre part des unités additionnelles comportant au moins d'une part une fonction alcool secondaire, d'autre part une fonction thioéther en position alpha de cette fonction alcool.

On a constaté de manière inattendue que la présence de ces unités additionnelles spécifiques conférait de hautes propriétés adhésives à des matériaux textiles ou métalliques vis-à-vis d'une matrice ou composition d'élastomère insaturé telle que celles couramment utilisées dans des pneumatiques.

Les renforts métalliques ainsi revêtus du polymère selon l'invention, en tant que primaire d'adhésion, présentent comme avantage majeur celui de pouvoir ensuite être collés à des matrices de caoutchouc insaturé en utilisant de simples colles textiles telles que des colles « RFL » (résorcinol-formaldéhyde-latex) ou autres compositions adhésives équivalentes, ou encore directement (c'est-à-dire sans emploi de telles colles) à ces matrices de caoutchouc insaturé lorsque ces dernières contiennent par exemple des élastomères insaturés fonctionnalisés appropriés tels que des élastomères époxydés.

Grâce à l'invention, peuvent être utilisés des renforts métalliques revêtus ou non revêtus de couches métalliques adhésives telles que du laiton, ainsi que des matrices de caoutchouc environnantes dépourvues de sels métalliques, en particulier de sels de cobalt.

L'invention concerne également l'utilisation du polymère selon l'invention comme primaire d'adhésion pour le collage de tout substrat, notamment métal tel que fer ou laiton, ou encore de verre, à un caoutchouc insaturé tel que notamment un élastomère diénique.

Ce polymère de l'invention présente une haute flexibilité, un allongement à la rupture important. Il a révélé par ailleurs des propriétés hydrophobes, le revêtement proposé présente des propriétés anti-corrosion efficaces. Ainsi, l'invention concerne également l'utilisation de ce polymère comme revêtement de protection anticorrosion d'un substrat en métal ou d'un substrat dont la surface est au moins en partie métallique, en particulier dans toute application où ledit substrat métallique est susceptible d'être utilisé dans un environnement humide.

Enfin, l'invention concerne également en soi tout substrat, notamment de métal ou de verre (ou tout au moins dont la surface comporte du métal ou du verre), qui est revêtu, au moins en partie, d'un polymère selon l'invention.

L'invention concerne en particulier tout renfort métallique revêtu d'un polymère selon l'invention. Elle concerne plus particulièrement tout fil, câble, film ou plaque métallique dont au moins une partie de la surface est en acier laitonné, caractérisé en ce que ledit acier laitonné est lui-même revêtu d'un polymère conforme à l'invention.

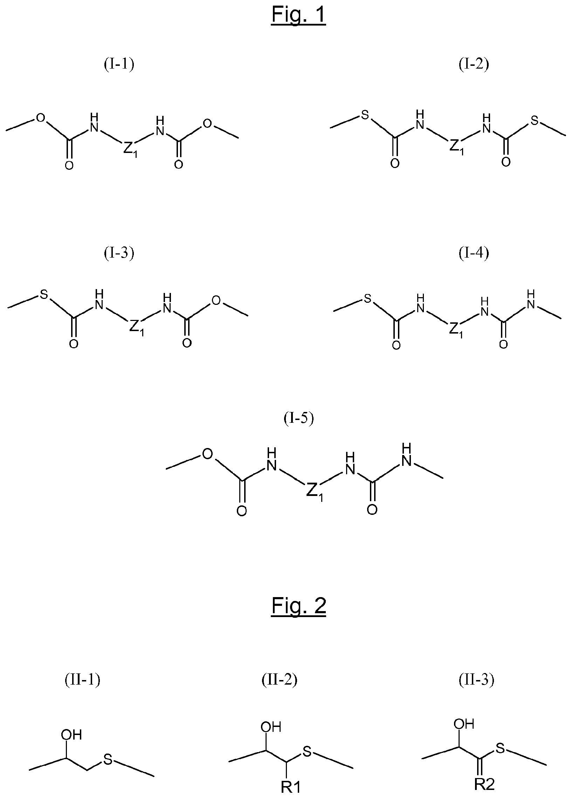

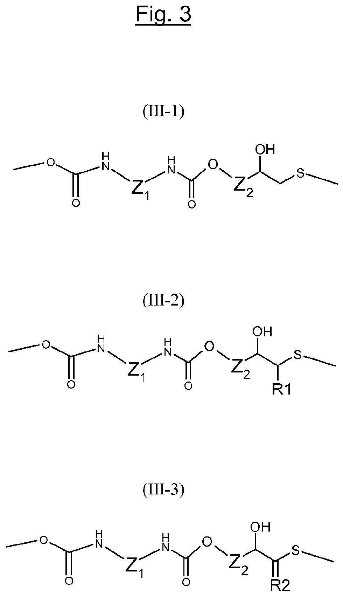

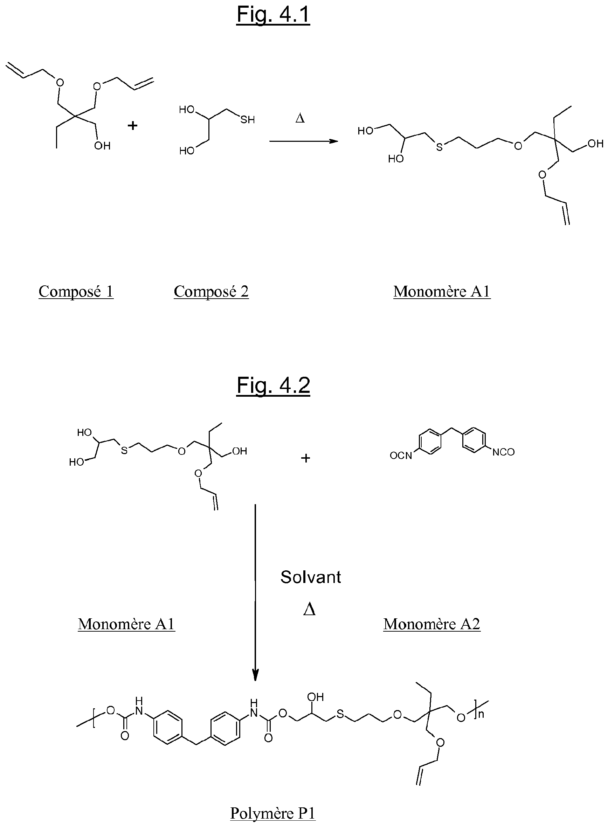

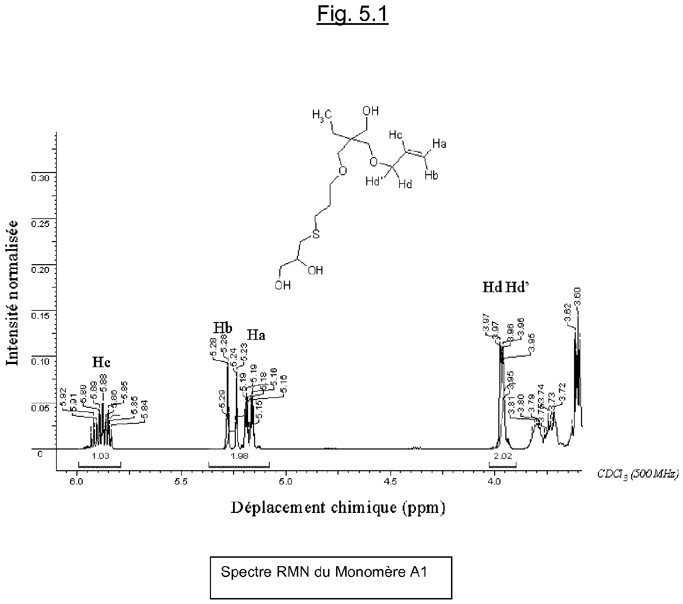

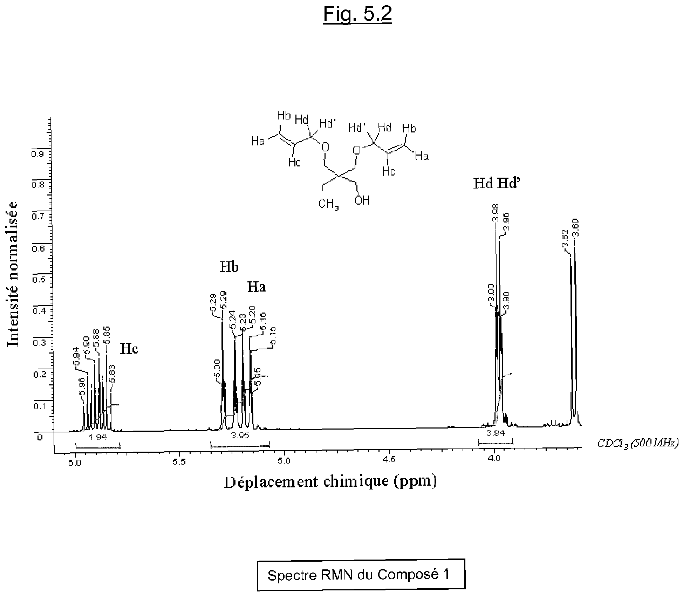

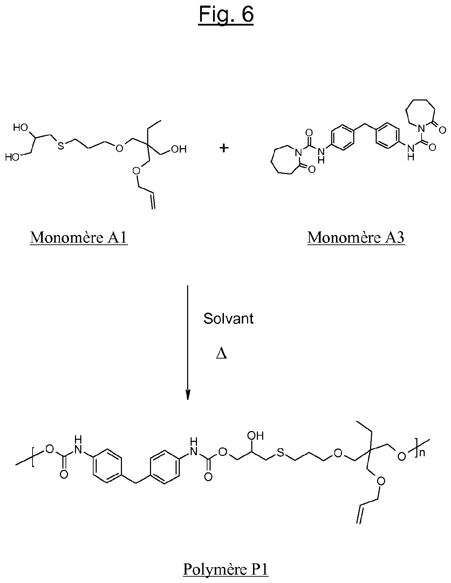

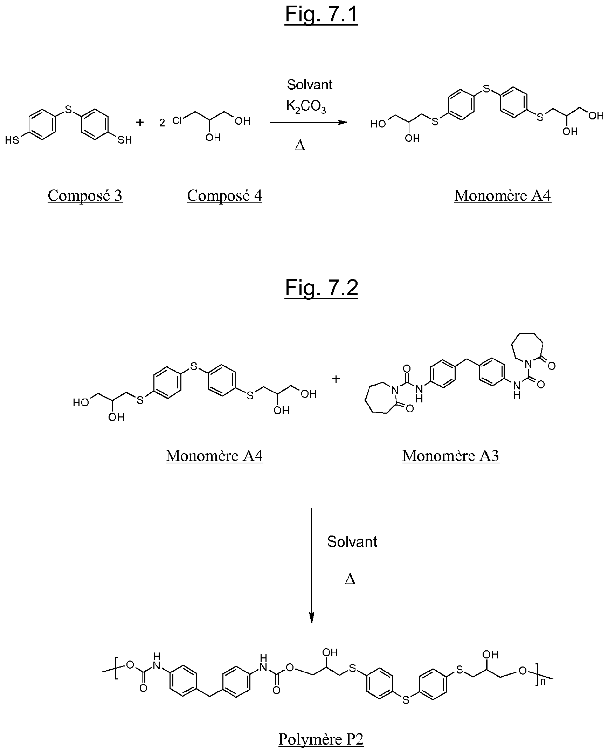

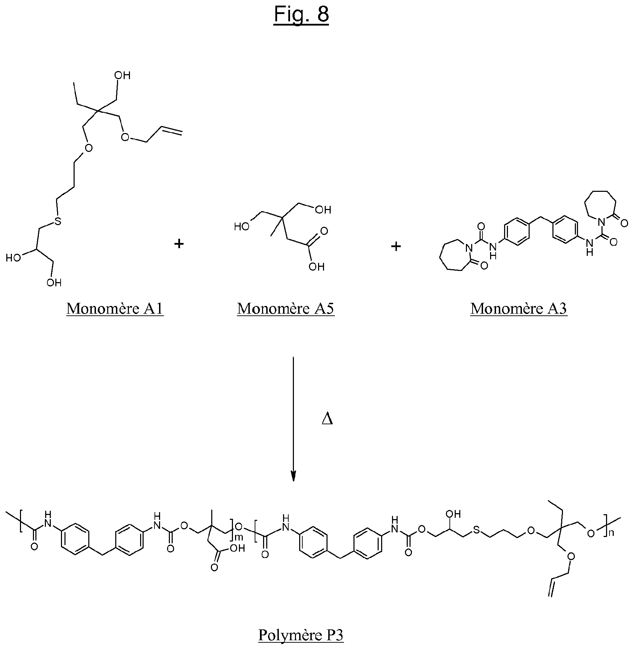

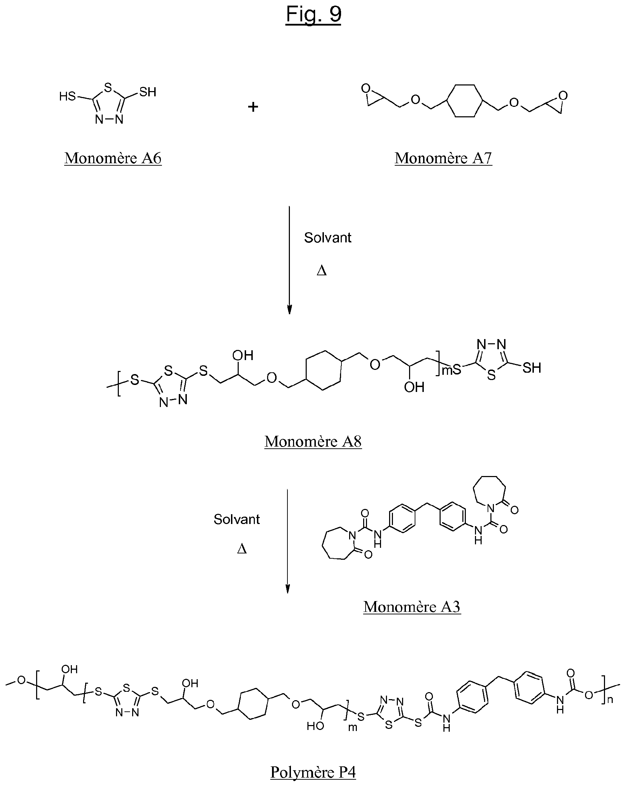

L'invention ainsi que ses avantages seront aisément compris à la lumière de la description détaillée et des exemples de réalisation qui suivent, ainsi que des figures 1-10 relatives à ces exemples qui représentent ou schématisent :
- des exemples d'unités de base comportant des motifs de formule générale (I), de formules particulières respectives (I-1) à (I-5) (Fig. 1) ;
- des exemples d'unités additionnelles comportant des motifs de formule générale (II), de formules particulières respectives (II-1) à (II-3) (Fig. 2) ;
- des exemples de séquences (unités structurelles récurrentes) de polymères polyuréthane conformes à l'invention, de formules (III-1) à (III-3), ces séquences comportant à la fois des unités de base de formule particulière (I-1) et des unités additionnelles de formules particulières (II-1) à (II-3) comportant des liaisons thioéther selon l'invention (Fig. 3) ;
- un schéma de synthèse possible d'un monomère diol (Monomère A1) à partir de deux composés (Composé 1 et Composé 2) (Fig. 4.1), puis d'un polymère (Polymère P1) conforme à l'invention à partir du Monomère A1 et d'un monomère diisocyanate MDI (Monomère A2) (Fig. 4.2) ;
- un spectre RMN ¹H (500 MHz) respectivement du Monomère A1 et de son Composé 1 de départ, tous deux dissous dans CDCl₃ (Fig. 5.1 et Fig. 5.2) ;
- un autre schéma de synthèse possible, à partir du Monomère A1 et d'un autre monomère diisocyanate (noté Monomère A3, MDI bloqué benzophénone), du même Polymère P1 (Fig. 6) ;
- un schéma de synthèse possible d'un autre monomère polyol (Monomère A4) (Fig. 7.1), ainsi que d'un autre polymère (Polymère P2) conforme à l'invention à partir du Monomère A4 et du Monomère A3 (Fig. 7.2) ;
- un schéma de synthèse possible, à partir des Monomère A1, Monomère A3 et d'un monomère polyol (noté Monomère A5), d'un autre polymère (Polymère P3) conforme à l'invention (Fig. 8) ;
- un schéma de synthèse possible en deux étapes successives, tout d'abord d'un monomère ou prépolymère (Monomère A8) à partir de deux autres monomères (Monomère A6 et Monomère A7), puis à partir du Monomère A8 et du Monomère A3, d'un autre polymère (Polymère P4) conforme à l'invention (Fig. 9).

### 4. DESCRIPTION DETAILLEE DE L'INVENTION

Le polymère de la présente invention a donc pour caractéristiques essentielles de comporter à la fois :
- des unités de base comportant au moins un (c'est-à-dire un ou plusieurs) motif de formule -X₁-CO-NH- dans laquelle X₁ représente O (on parle alors d'unités de base uréthane) ou S (unités de base thiouréthane), et d'autre part
- des unités additionnelles comportant au moins une (c'est-à-dire une ou plusieurs) fonction alcool secondaire et au moins une (c'est-à-dire une ou plusieurs) fonction thioéther en position α (alpha) vis-à-vis la fonction alcool (c'est-à-dire pour rappel, portée par un carbone adjacent au carbone portant la fonction alcool secondaire).

Dit autrement, une caractéristique essentielle du polymère de l'invention est donc que ses unités additionnelles comportent au moins un motif α-hydroxy-thioéther.

Ces unités de base et unités additionnelles vont être décrites en détail ci-après.

Préférentiellement, les unités de base du polymère de l'invention comportent au moins un motif de formule (I) :

(I) -X₁-C(O)-N(H)-Z₁-N(H)-C(O)-X₂-

dans lequel :
- X₁ représente O ou S ;
- X₂ (donc identique à ou différent de X₁) représente O, S ou NH ;
- Z₁ représente un groupement de liaison au moins divalent, aliphatique, cycloaliphatique ou aromatique.

De préférence, X₁ représente l'oxygène et X₂ représente l'oxygène ou le soufre, de préférence l'oxygène.

Préférentiellement, les unités additionnelles du polymère de l'invention comportent au moins un motif de formule (II) choisie parmi :

(II-1) -CH(OH)-CH₂-S-

(II-2) -CH(OH)-(CHR₁)-S-

(II-3) -CH(OH)-(C=R₂)-S-

dans lesquelles R₁ et R₂ représentent un groupement hydrocarboné, aliphatique, cycloaliphatique ou aromatique.

Ces formules génériques (I) d'une part, (II-1), (II-2) et (II-3) d'autre part ont été représentées ci-dessous sous une forme développée :

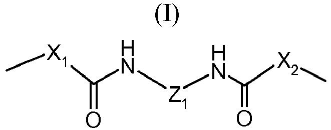

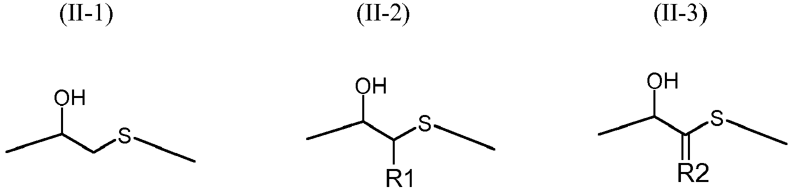

On note que dans les trois formules (II-1), (II-2) et (II-3) ci-dessus, il existe bien une fonction thioéther en position α de la fonction alcool secondaire.

Bien entendu, ces représentations sont équivalentes aux trois représentations dans lesquelles la fonction thioéther est en position a' (c'est-à-dire de l'autre côté) de la fonction alcool secondaire.

Selon une autre variante de réalisation possible de l'invention, illustrée à titre d'exemples par les trois formules notées (II-1'), (II-2') et (II-3') ci-dessous, ce sont 2 fonctions alcool secondaire (et non une seule) qui sont situées de part et d'autre de la fonction thioéther :

(II-1): -CH(OH)-CH₂-S-CH₂-CH(OH)-

(II-2) -CH(OH)-(CHR₁)-S-(CHR₁)-CH(OH)-

(II-3) -CH(OH)-(C=R₂)-S-(C=R₂)-CH(OH)-

Les motifs ci-dessus peuvent être qualifiés de motifs α-α'-dihydroxy-thioéther.

Sur la figure 1 annexée ont été représentées sous forme développée les cinq formules particulières (I-1 à I-5) possibles correspondant à la formule générique (I) dans laquelle X₁ représente O ou S, et X₂ représente O, S ou NH.

De manière bien connue de l'homme du métier, la formule particulière (I-1) décrit une unité structurelle de base d'un polymère du type poly(uréthane), la formule (I-2) une unité structurelle de base d'un polymère du type poly(thiouréthane), la formule (I-3) une unité structurelle de base d'un polymère du type poly(thiouréthane)(uréthane), la formule (I-4) une unité structurelle d'un polymère du type poly(thiouréthane)(urée), la formule (I-5) une unité structurelle de base d'un polymère du type poly(uréthane)(urée).

R₁ et R₂ représentent un groupement hydrocarboné, aliphatique, cycloaliphatique ou aromatique, pouvant comporter un hétéroatome tel que S, O ou N, comportant de préférence 1 à 12 atomes de carbone.

Plus préférentiellement, R₁ est un groupe aliphatique, encore plus préférentiellement un groupe alkyle. Plus préférentiellement encore, R₁ est un alkyle ayant de 1 à 5 atomes de carbone, cet alkyle pouvant être substitué ou non substitué ; plus particulièrement, R₁ représente un méthyle ou un éthyle, encore plus particulièrement un méthyle.

Plus préférentiellement, R₂ est un groupe aliphatique, encore plus préférentiellement un groupe alkylidène. Plus préférentiellement encore, R₂ est un alkylidène ayant de 1 à 5 atomes de carbone, cet alkylidène pouvant être substitué ou non substitué ; plus particulièrement, R₂ représente un méthylidène.

Z₁ représente un groupement de liaison divalent aliphatique, cycloaliphatique ou aromatique, le groupement aliphatique comportant de préférence 1 à 30 (plus préférentiellement 1 à 20) atomes de carbone, le groupement cycloaliphatique de préférence de 3 à 30 (plus préférentiellement 3 à 20) atomes de carbone, le groupement aromatique de 6 à 30 (plus préférentiellement 6 à 20) atomes de carbone.

Le polymère de l'invention est de préférence un polymère du type linéaire, donc issu d'un monomère diisocyanate. Le diisocyanate utilisé peut être aromatique, aliphatique ou cycloaliphatique ; il peut s'agir d'un monomère, d'un prépolymère ou quasi-prépolymère, voir même d'un polymère.

Selon un mode de réalisation préférentiel, le diisocyanate dont est issu le polymère de l'invention est choisi dans le groupe constitué par les composés aromatiques suivants : diphénylméthane diisocyanate (en abrégé « MDI »), toluène diisocyanate (« TDI »), naphtalène diisocyanate (« NDI »), 3,3'-bitoluène diisocyanate (« TODI »), paraphénylène diisocyanate (« PPDI »), leurs différents isomères, et les mélanges de ces composés et/ou isomères.

Plus préférentiellement, on utilise un MDI ou un TDI, plus préférentiellement encore un MDI.

Tous les isomères du MDI (notamment 2,2'-MDI, 2,4'-MDI, 4,4'-MDI) et leurs mélanges sont utilisables, ainsi que des MDI dits polymériques (ou « PMDI ») comportant des oligomères de formule suivante (avec p égal ou supérieur à 1) :

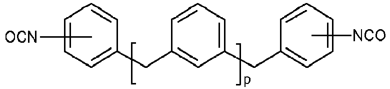

Sont également utilisables des composés diisocyanates du type aliphatiques, tels que par exemple 1,4-tétraméthylène diisocyanate, 1,6-hexane-diisocyanate (« HDI »), 1,4-bis(isocyanatométhyl)-cyclohexane, 1,3-bis(isocyanatométhyl)-cyclohexane, 1,3-bis(isocyanatométhyl)benzène, 1,4-bis(isocyanatométhyl)benzène, isophorone diisocyanate (« IPDI »), bis(4-iso-cyanatocyclohexyl)méthane diisocyanate (« H12MDI »), 4,4'-dicyclohexylméthane diisocyanate (« H13MDI »).

Selon un mode de réalisation particulièrement préférentiel, le diisocyanate utilisé est le 4,4'-MDI (4,4'-diphénylméthane diisocyanate) ayant pour formule : 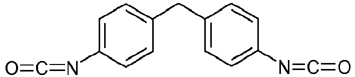 ou, si plusieurs diisocyanates sont utilisés, constitue le diisocyanate majoritaire en poids, représentant de préférence dans le dernier cas plus de 50% du poids total des composés diisocyanates.

On pourra aussi utiliser avantageusement un 4,4'-MDI bloqué caprolactame (par exemple le produit sous forme solide « Grilbond » IL-6 de la société EMS), de formule :

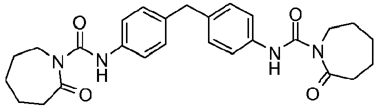

L'invention n'étant toutefois pas limitée à un polymère du type linéaire (pour rappel, issu d'un diisocyanate), on pourra également utiliser, notamment dans le but d'augmenter la Tg du polymère de l'invention par formation d'un réseau tridimensionnel, un composé triisocyanate tel que par exemple un trimère de MDI à noyau triazine de formule ci-dessous :

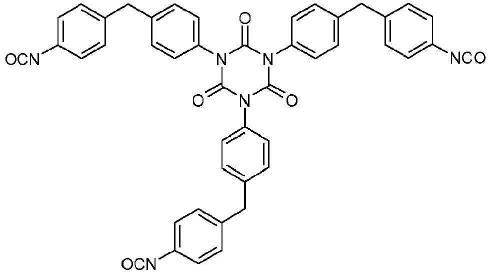

Selon un autre mode de réalisation particulièrement préférentiel, X₁ et X₂ représentent tous deux un atome d'oxygène (O), c'est-à-dire que le polymère de l'invention est un polymère du type poly(uréthane).

Selon un autre mode de réalisation particulièrement préférentiel, X₁ et X₂ représentent tous deux un atome de soufre (S), c'est-à-dire que le polymère de l'invention est un polymère du type poly(thiouréthane).

Selon un mode de réalisation essentiel de l'invention, le polymère (notamment polyuréthane ou polythiouréthane) de l'invention comporte donc, en plus de ces unités de base de formule (I), au moins une fonction alcool secondaire en position α (alpha) de la fonction thioéther. Ainsi, selon un mode de réalisation plus particulièrement préférentiel, le polymère de l'invention est par exemple un polyuréthane comportant au moins des enchaînements d'unités de base de formule (I-1) et d'unités additionnelles de formules (II-1), (II-2) ou (II-3).

Un tel polyuréthane préférentiel selon l'invention comporte plus préférentiellement au moins une séquence (unité structurelle récurrente) qui comprend au moins un motif répondant à une des formules ci-dessous (III-1) à (III-3) :

(III-1) -O-C(O)-NH-Z₁-NH-C(O)-O-Z₂-CH(OH)-(CH₂)-S- ;

(III-2) -O-C(O)-NH-Z₁-NH-C(O)-O-Z₂-CH(OH)-(CHR₁)-S- ;

(III-3) -O-C(O)-NH-Z₁-NH-C(O)-O-Z₂-CH(OH)-(C=R₂)-S-.

Les formules (III-1) à (III-3) ci-dessus, dans lesquelles Z₂ est donc destiné à relier les unités de base de formule (I) et le motif de formule (II), ont été également représentées sous forme développée à la figure 3 annexée.

Dans ces trois formules, Z₁, R₁ et R₂ ont les définitions précédemment données et Z₂, pouvant être notamment identique à ou différent de Z₁, représente lui aussi un groupement de liaison au moins divalent, aliphatique, cycloaliphatique ou aromatique, le groupement aliphatique comportant de préférence 1 à 30 (plus préférentiellement 1 à 20) atomes de carbone, le groupement cycloaliphatique de préférence 3 à 30 (plus préférentiellement 3 à 20) atomes de carbone, le groupement aromatique 6 à 30 (plus préférentiellement 6 à 20) atomes de carbone. Z₁ et Z₂, identiques ou différents, peuvent être saturés ou insaturés, substitués ou non substitués.

Plus préférentiellement encore, Z₂ est un alkylène comportant de 1 à 12 atomes de carbone, en particulier 1 à 4 atomes de carbone (méthylène, éthylène, butylène ou propylène), plus particulièrement encore un groupement méthylène (CH₂).

Les figures 4 et 6 à 9 annexées représentent des exemples préférentiels de polymères conformes à l'invention, ou de monomères utilisables pour la synthèse de ces polymères, ainsi que divers schémas de synthèse possibles de ces monomères et/ou polymères.

Les figures 4.1 et 4.2 illustrent notamment des procédés de synthèse possible respectivement d'un monomère polyol (Monomère A1) avec 2 fonctions alcool primaire (diol primaire), puis d'un polymère (Polymère P1) conforme à l'invention du type polyuréthane, à partir de ce Monomère A1 et d'un monomère diisocyanate MDI (Monomère A2), procédés qui seront décrits en détail ultérieurement.

Cet exemple de polymère conforme à l'invention comporte bien un motif récurrent de formule (III-1) :

-O-C(O)-NH-Z₁-NH-C(O)-O-Z₂-CH(OH)-(CH₂)-S-,

tel que défini précédemment, dans lequel Z₁ et Z₂ ont les définitions générales données pour les motifs de formule (I), (II) et (III), Z₁ correspondant plus particulièrement au groupe divalent résidu de MDI et Z₂ correspondant au méthylène (CH₂).

On voit bien sur cette figure 4.2 que conformément à l'invention le Polymère P1 contient, en plus de ses unités de base uréthane, des unités additionnelles qui comportent une (seule) fonction thioéther (- S -) en position α d'une fonction alcool secondaire (- CH(OH) -).

La figure 6 illustre un autre procédé de synthèse possible de ce même Polymère P1 selon l'invention, cette fois à partir du Monomère A1 et d'un autre monomère diisocyanate (Monomère A3, MDI bloqué caprolactame), procédé qui sera décrit en détail ultérieurement.

Les figures 7.1 et 7.2 illustrent des procédés de synthèse possible respectivement d'un autre monomère polyol (diol primaire) (Monomère A4), puis d'un autre polymère (Polymère P2) conforme à l'invention du type polyuréthane, à partir du Monomère A3 et du Monomère A4, procédés qui seront décrits en détail ultérieurement.

Cet autre exemple de polymère conforme à l'invention comporte bien un motif récurrent de formule (III-1) :

-O-C(O)-NH-Z₁-NH-C(O)-O-Z₂-CH(OH)-(CH₂)-S-,

tel que défini précédemment, dans lequel Z₁ et Z₂ ont les définitions générales données pour les motifs de formule (I), (II) et (III), Z₁ correspondant plus particulièrement au groupe divalent résidu de MDI et Z₂ correspondant au méthylène (CH₂).

On voit bien sur la figure 7.2 que conformément à l'invention le Polymère P2 contient, en plus de ses unités de base uréthane, des unités additionnelles qui comportent cette fois, non pas une seule, mais trois fonctions thioéther (- S -) dont deux sont en position α d'une fonction alcool secondaire.

La figure 8 illustre un autre procédé de synthèse d'un autre polymère (Polymère P3) conforme à l'invention, à partir des Monomère A1, Monomère A3 et d'un autre monomère polyol (Monomère A5), procédé qui sera décrit en détail ultérieurement.

La figure 9 illustre un autre procédé de synthèse cette fois en deux étapes successives, tout d'abord à partir de deux autres monomères (Monomères A6 et A7) pour formation d'un prépolymère (ou Monomère A8), puis par réaction du prépolymère avec le Monomère A3, d'un autre polymère (Polymère P4) conforme à l'invention, procédé qui sera décrit en détail ultérieurement.

Ces deux autres exemples de polymère conforme à l'invention comportent bien à la fois des unités de base comportant au moins un motif récurrent de formule (I) :

-X₁-C(O)-N(H)-Z₁-N(H)-C(O)-X₂-

et des unités additionnelles comportant au moins un motif de formule (II-1) :

-CH(OH)-(CH₂)-S-

telles que définies précédemment, dans lesquelles X₁, X₂, Z₁ ont les définitions générales données pour les motifs de formule (I) et (II), Z₁ correspondant plus particulièrement au groupe divalent résidu de MDI.

On voit bien sur les figures 8 et 9 que conformément à l'invention les Polymères P3 et P4 contiennent, outre leurs unités de base, des unités additionnelles comportant au moins une fonction thioéther (- S -) en position α d'une fonction alcool secondaire (- CH(OH) -).

Typiquement, le polymère de l'invention peut comporter de dix à plusieurs centaines, préférentiellement de 20 à 200 unités structurelles à motif de formule (I) et motif de formule (II), en particulier d'unités structurelles à motif de formule (III), telles que représentées notamment à titre d'exemples dans les figures annexées (Fig. 4.2 et Fig. 6 pour le Polymère P1, Fig. 7.2 pour le Polymère P2, Fig. 8 pour le Polymère P3 et Fig. 9 pour le Polymère P4). Sa température de transition vitreuse Tg, mesurée par DSC *(Differential Scanning Calorimetry),* par exemple selon la norme ASTM D3418, est de préférence supérieure à 50°C, plus préférentiellement supérieure à 100°C, en particulier comprise entre 130°C et 250°C.

Comme indiqué précédemment, ce polymère de l'invention est avantageusement utilisable comme revêtement hydrophobe sur tout type de substrat, notamment en métal ou en verre, ou encore comme primaire d'adhésion sur tout type de renfort métallique, tel que par exemple un fil, un film, une plaque ou un câble en acier au carbone, laitonné ou non laitonné, destiné en particulier à renforcer une matrice de caoutchouc insaturé tel que du caoutchouc naturel.

### 5. EXEMPLES DE REALISATION DE L'INVENTION

Dans la présente demande, sauf indication expresse différente, tous les pourcentages (%) indiqués sont des pourcentages en masse.

### 5.1. Essai 1 - Synthèse du Monomère A1

Le monomère A1 est le 3-[3-(2-allyloxyméthyl-2-hydroxyméthyl-butoxy)-propylsulfanyl]-propane-1,2-diol. Ce monomère a été synthétisé selon le mode opératoire schématisé à la figure 4.1, comme détaillé ci-après : on place dans un ballon en verre de 50 ml, muni d'un barreau magnétique, 4,76 g de Composé 1 (triméthylol-propane-diallyl éther, pur à 90%, de Sigma Aldrich) puis 2,16 g de Composé 2 (thioglycérol), l'ensemble étant recouvert d'un bouchon en verre afin d'éviter des pertes par évaporation ; le mélange réactionnel est agité à température ambiante (20°C) durant 4 heures, puis toute la nuit suivante (environ 12 heures) à une température de 80°C.

On obtient ainsi un liquide visqueux transparent dont le spectre RMN (reproduit à la Fig. 5.1) comparé au spectre RMN du Composé 1 de départ (reproduit à la Fig. 5.2), en prenant comme référence la transition du groupe méthyle à 0,86 ppm (3 protons) et en suivant la diminution des intégrales correspondant aux protons du groupe vinyloxy, confirme bien à l'homme du métier qu'il s'agit du Monomère A1, de formule :

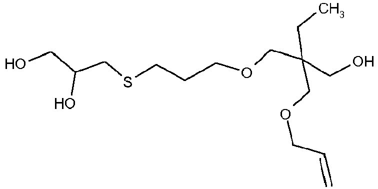

L'analyse RMN ¹H (500 MHz, CDCl₃) (Fig. 5.1) du produit a donné les résultats suivants : *0.85 (m, 3H), 1.39 (m, 2H), 11.86 (m, 1H), 2.65 (m, 3H), 3.46 m (8 H), 3.73-3.75* (s, *2H),* 3.98 *(d, 2H), 5.16-5.19 (d, 1H), 5.28 (d, 1H), 5.88 (m, 1H).*

Enfin, la masse moléculaire du produit telle que mesurée par spectrométrie de masse "ESI" *(Electrospray Ionisation),* dans un mélange eau/acétonitrile 1/1 (avec traces de NaCl), a été évaluée en mode négatif (anion [M + Cl]⁻) à 357,3 (valeur théorique calculée égale à 357,5), et en mode positif (cation [M + Na]⁺) à 345,2 (valeur théorique calculée égale à 345,5).

### 5.2. Essai 2 - Synthèse du Polymère P1 par réaction des Monomères A1 et A2

Cet essai décrit de manière détaillée la synthèse du Polymère P1 conforme à l'invention, à partir des Monomères A1 et A2, selon le mode opératoire schématisé à la figure 4.2.

On place 3,40 g de Monomère A1 dans un ballon sec de 50 ml puis, à titre de catalyseur de polymérisation, 18,1 mg (soit 0,3% massique) de néodécanoate de bismuth et 100 ml de solvant γ-butyrolactone, le tout sous atmosphère inerte (courant d'azote). Puis, une solution (elle-même sous atmosphère inerte) de 2,64 g de Monomère A2 (MDI solide dissous dans 20 ml de γ-butyrolactone) est ajoutée à l'aide d'une ampoule à addition dans le ballon de 50 ml. Le mélange réactionnel transparent est agité et chauffé à 80°C durant 4 heures.

Puis on dépose 3 ml de la solution de Polymère P1 ainsi obtenu sur une plaque en verre (10x10 cm); la plaque de verre est entreposée sous vide et à 80°C durant 1 heure, jusqu'à ce que le solvant (y-butyrolactone) soit évaporé. Le film transparent de Polymère P1 ainsi obtenu a été analysé par spectroscopie « ATR-FTIR » (*Attenuated Total Reflection InfraRed*) : la synthèse d'un polyuréthane est bien confirmée par l'apparition du pic visible à 1700 cm⁻¹, caractéristique de la liaison -OCONH-.

On a noté au passage que le Polymère P1 ainsi obtenu présentait une excellente adhésion au verre (impossibilité de séparer par traction le polymère du verre).

Puis, pour la mesure de sa masse moléculaire, le polymère dissous dans un mélange (1:20) de γ-butyrolactone et THF (tétrahydrofurane) a été soumis à une analyse GPC (*Gel Permeation Chromatography*) (colonne C18-phase inverse et THF comme phase mobile) : on a déterminé ainsi une masse moléculaire (Mw) d'environ 140 000 (témoins de polystyrène de masse moléculaire située entre 500 et 500 000). La même synthèse en l'absence du catalyseur de polymérisation a conduit à un profil très large d'élution avec une distribution majoritaire centrée à environ 17 000.

Enfin, la même synthèse conduite avec 1% en masse de catalyseur et dans le solvant DTP (1,3-diméthyl-3,4,5,6-tétrahydro-2(1*H*-pyrimidinone - CAS 7226-23-5) a conduit à une valeur de Tg égale à environ 93°C (DSC de -80°C à 200°C (10°C/min), 2^{ème} passage).

### 5.3. Essai 3 - Synthèse du Polymère P1 par réaction des Monomères A1 et A3

Le Polymère P1 conforme à l'invention a été également synthétisé à partir des monomères A1 et A3 (MDI bloqué caprolactame), selon le mode opératoire simple schématisé à la figure 6.

Dans un récipient en verre, on place 226,4 mg de Monomère A1 et 334,6 mg de Monomère A3 (« Grilbond » IL-6) ; puis 8 ml de solvant γ-butyrolactone sont ajoutés et le mélange est chauffé sous courant d'air chaud (120°C) jusqu'à l'obtention d'une solution claire.

3 ml de cette solution sont ensuite déposés de manière uniforme sur une plaque de verre (10x10 cm); le tout placée dans une étuve à 190°C pendant 15 min, sous vide afin d'éliminer les traces de solvant. Le film transparent ainsi obtenu de Polymère P1 a été caractérisé comme précédemment (ATR-FTIR) et a donné pratiquement le même spectre infrarouge. L'analyse DSC (second passage) de -80°C à 200°C (10°C/min) a révélé une Tg égale à environ 120°C.

### 5.4. Essai 4 - Test d'adhésion du Polymère 1 dans un composite métal / caoutchouc

Dans cet essai, un nouvel échantillon de Polymère P1 conforme à l'invention a été synthétisé comme indiqué dans l'essai précédent, en remplaçant simplement le solvant γ-butyrolactone par du DTP.

Un film fin du Polymère P1 ainsi obtenu a été déposé (à température ambiante) de manière uniforme à la surface d'une plaque de laiton. Puis on a recouvert le tout d'une couche de colle textile conventionnelle du type « RFL » (résorcinol-formaldéhyde-latex). Après un pré-séchage de 5 min à 100°C, l'ensemble a été ensuite traité à l'étuve à 190°C pendant 10 min.

La plaque en laiton ainsi revêtue du film de Polymère P1 et encollée RFL, a été ensuite disposée dans une matrice de composition (à l'état cru, non vulcanisé) de caoutchouc conventionnelle pour armature de ceinture de pneu tourisme, à base de caoutchouc naturel, de noir de carbone et silice à titre de charge, et d'un système de vulcanisation (soufre et accélérateur sulfénamide) ; cette composition étant dépourvue de sel de cobalt.

Puis l'éprouvette de composite métal / caoutchouc ainsi préparée a été placée sous presse et le tout cuit (vulcanisé) à 165°C pendant 30 min sous une pression de 20 bar. Après vulcanisation du caoutchouc, on a obtenu un excellent collage entre la matrice de caoutchouc et la plaque de métal malgré l'absence de sel de cobalt dans la matrice de caoutchouc : lors de tests de pelage conduits à la fois à température ambiante (23°C) et à haute température (100°C), on a constaté en effet que la rupture se produisait systématiquement dans la matrice de caoutchouc elle-même et non à l'interphase entre métal et caoutchouc.

### 5.5. Essai 5 - Synthèse du Monomère A4

Le monomère A4 est le 3-{4-[4-(2,3-dihydroxy-propylsulfanyl)-phénylsulfanyl]-phénylsulfanyl}-propane-1,2-diol. Ce monomère a été synthétisé selon le mode opératoire schématisé à la figure 7.1, comme détaillé ci-après.

Dans un ballon à 4 cols de 500 ml préalablement séché sous vide à plus de 100°C, équipé d'un condenseur, thermomètre et barreau magnétique, sont introduits sous atmosphère inerte (courant d'azote), 8,3 g de 4,4'-thiobisbenzènethiol solide (soit 33,03 mmol) puis 10,0 g de carbonate de potassium (soit 72,56 mmol, préalablement séché sous vide à 150°C pendant 12 h). On verse ensuite 200 ml de DMSO anhydre, la dispersion est purgée sous azote durant 30 min, puis on ajoute goutte à goutte 7,29 g de 3-chloro-1,2-propanediol liquide (soit 66,05 mmol). Le mélange réactionnel est chauffé immédiatement à 100°C durant 5 h, toujours sous courant azote. On laisse ensuite refroidir la solution obtenue à température ambiante, et le carbonate de potassium (K₂CO₃) solide est récupéré par filtrage sur un papier filtre. Le filtrat est ensuite lavé avec 50 ml de DMSO, puis le tout versé dans 250 ml d'eau déionisée à 0°C (glace) pour précipitation du produit visé.

Pour neutralisation du K₂CO₃ résiduel, on ajoute ensuite 10 ml de HCl (à 10%) et 1 litre d'eau déionisée. Après séchage sous vide à 60°C durant toute la nuit (12 h), le précipité obtenu (solide collant de couleur orange) est versé dans 500 ml d'acétate d'éthyle, le tout chauffé jusqu'à 40°C jusqu'à la dissolution complète. La solution obtenue est refroidie à température ambiante (20°C) puis transvasée dans une ampoule à séparation, 50 ml de NH4Cl saturé (aqueux) sont ensuite ajoutés. Après agitation, la phase organique est séparée puis lavée deux fois avec 25 ml d'eau déionisée, puis séchée avec du carbonate de sodium sec. Après filtration et distillation de l'acétate d'éthyle à l'évaporateur rotatif (« Rotavap »), le solide obtenu est séché à 80°C.

Les analyses RMN et ESI confirment bien la structure du Monomère A4, de formule :

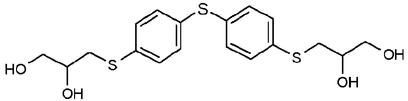

L'analyse RMN ¹H (500 MHz, DMSO-*d₆*) du produit a donné les résultats suivants :
*2.89 (m, 2H), 3.11 (m, 2H), 3.40 (m, 4H), 3.61 (m, 2H),* 4.67 *(d, 2H),* 4.99 *(d, 2H),* 7.22-7.24 *(d, 4H), 7.31-7.33 (d, 4H).*

Quant à la masse moléculaire mesurée par spectrométrie de masse ESI, dans un mélange acétate d'éthyle/méthanol (1/1) (avec traces de NaCl aqueux), elle a été évaluée en mode négatif (anion [M + Cl]⁻) à 433,3 (valeur théorique calculée égale à 434,0), et en mode positif (cation [M + Na]⁺) à 421,1 (valeur théorique calculée égale à 420,6).

### 5.6. Essai 6 - Synthèse du Polymère P2 par réaction des Monomères A3 et A4

Cet essai décrit de manière détaillée la synthèse du Polymère P2 conforme à l'invention, à partir des monomères A3 et A4, selon le mode opératoire schématisé à la figure 7.2.

On place dans un flacon en verre, 280,0 mg de Monomère A4, 334,6 mg de Monomère A3 et 8 ml de solvant NMP. La suspension est chauffée (sous courant d'air chaud) à 120°C, jusqu'à l'obtention d'une solution claire.

Puis on dépose 3 ml de la solution ainsi obtenue sur une plaque en laiton polie (10x10 cm) qui est ensuite passée à l'étuve à 190°C durant 15 min. On obtient ainsi un film transparent de Polymère P2 dont l'analyse DSC (second passage, de -80°C à 200°C ; 10°C/min) a révélé une Tg d'environ 115°C. On peut noter qu'une réaction de polymérisation similaire, mais conduite dans un mélange solvant 1-méthoxypropanol-2-acetate / sulfolane (3:1), a conduit à une Tg d'environ 130°C.

Un test d'adhésion du Polymère 2 dans un composite métal (plaque laiton) / caoutchouc, comme décrit à l'essai 4 qui précède, a lui aussi conduit à un excellent résultat, avec une rupture systématique dans la matrice de caoutchouc elle-même et non à l'interphase entre métal et caoutchouc.

### 5.7. Essai 7 - Synthèse du Polymère P3 par réaction des Monomères A1, A3 et A5

Cet essai décrit la synthèse du Polymère P4 conforme à l'invention, à partir des Monomères A1, A3 et A5, selon le mode opératoire schématisé à la figure 8.

Dans un flacon en verre, on verse successivement 1,34 g de monomère A1, 0,61 g de Monomère A5 (BHBA, acide 2,2-bis(hydroxyméthyl) propionique) puis 7,90 g de Monomère A3 (MDI bloqué caprolactame, « Grilbond » IL-6 50%-F). La suspension est agitée sous vibration mécanique (dispositif vortex) tout en augmentant légèrement la température jusqu'à environ 50°C (courant d'air chaud).

Puis 2,3 g de la suspension obtenue sont répartis de manière homogène sur une plaque en verre (10x10 cm) qui est ensuite traitée à l'étuve 10 min à 190°C, jusqu'à l'apparition d'un film clair de couleur jaune ; on traite 10 min supplémentaires sous vide afin d'évacuer les composants gazeux (soit un traitement total de 20 min à 190°C). On obtient ainsi un mince film jaune de Polymère P3 conforme à l'invention qui adhère très bien au verre (impossibilité de séparer par traction le polymère du verre).

On a également disposé 150 mg de la suspension ci-dessus sur une plaque de laiton (3x3 cm) ensuite traitée à l'étuve à 190°C durant 10 min, puis 10 min supplémentaires sous vide (soit un traitement total de 20 min à 190°C) ; on a pu confirmer une excellente adhésion du polymère de l'invention également sur le métal, avec impossibilité de séparer par traction le polymère de la plaque de laiton.

### 5.8. Essai 8 - Synthèse du Polymère P4

Cet essai décrit de manière détaillée la synthèse en deux étapes du Polymère P4 conforme à l'invention, dans un premier temps à partir des Monomères A6 et A7 pour formation d'un prépolymère (ou Monomère A8), puis dans un deuxième temps des Monomères A8 et A3, selon le mode opératoire schématisé à la figure 9.

Dans un appareillage sec équipé d'un système de refroidissement et courant d'azote, sont introduits 180 mg (soit 0,70 mmol) de Monomère A7 (1,4-cyclohexanediméthanol diglycidyl) et 3 ml de solvant THF; puis on ajoute sous agitation 81,5 mg (soit 0,70 mmol) de Monomère A6 (1,3,5-thiadiazole-2,5-dithiol) et la solution est chauffée à reflux pendant 1 h. Le solvant est complètement éliminé par distillation sous vide, et le liquide transparent ainsi obtenu (prépolymère ou Monomère A8) est analysé par DSC (-80°C à 200°C, 10°C/min) ; il présente un pic de Tg à environ -33°C, suivi d'une endothermie comprise entre 100 et 200°C (pic à environ 136°C) ; au deuxième passage, ce prépolymère présentait une Tg d'environ 10°C.

Puis, on verse dans un flacon en verre 261,5 mg de Monomère A8 (prépolymère précédent), 336 mg de Monomère A3 (MDI solide, « Grilbond » IL-6), le tout mélangé avec 8 ml de DTP ; la suspension est agitée sous vibration mécanique (dispositif vortex) tout en augmentant légèrement la température (environ 50°C) jusqu'à dissolution complète du Monomère A3.

On dépose ensuite de manière homogène 1,5 ml de cette solution sur une plaque de verre (10x10 cm) qui est ensuite traitée à l'étuve à 170°C (ventilation par air) pendant 15 min, puis 15 min supplémentaires à 170°C sous vide pour éliminer toute trace de solvant.

Le Polymère P4 (mince film de couleur jaune) conforme à l'invention ainsi obtenu a montré une excellente adhésion à la fois sur le verre, le laiton et le zinc. L'analyse DSC a révélé une valeur de Tg d'environ 130°C (second passage).

En conclusion, les essais précédents démontrent que le polymère de l'invention, caractérisé notamment par une température de transition vitreuse élevée, une haute stabilité thermique et chimique, présente une excellente adhésion au verre ou au métal.

Utilisé notamment comme primaire d'adhésion sur métal dans des composites métal / caoutchouc, ce polymère permet très avantageusement de coller le métal aux matrices de caoutchouc en utilisant de simples colles textiles telles que des colles RFL ou autres compositions adhésives équivalentes, ou encore directement (c'est-à-dire sans emploi de telles colles) à ces matrices de caoutchouc lorsque ces dernières contiennent par exemple des élastomères insaturés fonctionnalisés appropriés tels que des élastomères époxydés.

Ainsi peuvent notamment être supprimés les sels de cobalt (ou autres sels métalliques) dans les compositions de caoutchouc destinées à être reliées à des renforts métalliques laitonnés.

## Revendications

1. Polymère à unités uréthane ou thiouréthane comportant au moins, d'une part des unités de base comportant au moins un motif de formule -X₁-CO-NH- dans laquelle X₁ représente respectivement O ou S, et d'autre part des unités additionnelles comportant au moins d'une part une fonction alcool secondaire, d'autre part une fonction thioéther en position alpha de cette fonction alcool.

2. Polymère selon la revendication 1, dans lequel les unités de base comportent au moins un motif de formule (I):
-X₁-C(O)-N(H)-Z₁-N(H)-C(O)-X₂-
dans laquelle X₂ représente O, S ou NH, et Z₁ représente un groupement de liaison au moins divalent, aliphatique, cycloaliphatique ou aromatique.

3. Polymère selon les revendications 1 ou 2, dans lequel les unités additionnelles comportent au moins un motif de formule (II) choisie parmi :
(II-1) -CH(OH)-(CH₂)-S-
(II-2) -CH(OH)-(CHR₁)-S-
(II-3) -CH(OH)-(C=R₂)-S-
dans lesquelles R₁ et R₂ représentent un groupement hydrocarboné aliphatique, cycloaliphatique ou aromatique.

4. Polymère selon l'une quelconque des revendications 1 à 3, dans lequel X₁ représente l'oxygène et dans lequel X₂ représente l'oxygène ou le soufre, de préférence l'oxygène.

5. Polymère selon l'une quelconque des revendications 3 ou 4, dans lequel R₁ et R₂ comportent de 1 à 12 atomes de carbone.

6. Polymère selon la revendication 5, dans lequel R₁ est un alkyle ayant de 1 à 5 atomes de carbone, de préférence un méthyle et R₂ est un alkylidène ayant de 1 à 5 atomes de carbone, de préférence un méthylidène.

7. Polymère selon l'une quelconque des revendications 2 à 6, dans lequel Z₁ représente un groupement de liaison aliphatique ou cycloaliphatique, le groupement aliphatique comportant 1 à 30 atomes de carbone et le groupement cycloaliphatique comportant 3 à 30 atomes de carbone, ou un groupement aromatique comportant 6 à 30 atomes de carbone.

8. Polymère selon la revendication 7, issu d'un monomère diisocyanate choisi dans le groupe constitué par les composés diphénylméthane diisocyanate (MDI), toluène diisocyanate (TDI), naphtalène diisocyanate (NDI), 3,3'-bitoluène diisocyanate (TODI), paraphénylène diisocyanate (PPDI), leurs isomères et les mélanges de ces composés et/ou isomères, de préférence issu d'un monomère diisocyanate MDI.

9. Polymère selon l'une quelconque des revendications 3 à 8, dans lequel les unités de base à motif de formule (I) et le motif de formule (II) sont reliés entre eux par un groupement de liaison au moins divalent noté Z₂, aliphatique, cycloaliphatique ou aromatique.

10. Polymère selon la revendication 9, dans lequel Z₂ est un alkylène comportant de 1 à 12 atomes de carbone, de préférence 1 à 4 atomes de carbone.

11. Polymère selon l'une quelconque des revendications 9 ou 10, comportant une unité structurelle récurrente qui comprend au moins un motif répondant à une des formules (III-1) à (III-3) :
(III-1) -OC(O)-NH-Z₁-NH-C(O)-O-Z₂-CH(OH)-(CH₂)-S- ;
(III-2) -O-C(O)-NH-Z₁-NH-C(O)-O-Z₂-CH(OH)-(CHR₁)-S- ;
(III-3) -O-C(O)-NH-Z₁-NH-C(O)-O-Z₂-CH(OH)-(C=R₂)-S-.

12. Utilisation d'un polymère selon l'une quelconque des revendications 1 à 11, comme primaire d'adhésion pour le collage d'un substrat, dont au moins la surface comporte du verre ou du métal, à un caoutchouc insaturé.

13. Utilisation d'un polymère selon l'une quelconque des revendications 1 à 11, comme revêtement de protection anticorrosion d'un substrat dont la surface est au moins en partie métallique.

14. Substrat revêtu au moins en partie d'un polymère selon l'une quelconque des revendications 1 à 11, ledit substrat étant de préférence en verre ou en métal.

15. Renfort métallique, **caractérisé en ce qu'**il est revêtu d'un polymère selon l'une quelconque des revendications 1 à 11.

16. Fil, câble, film ou plaque métallique selon la revendication 15, dont au moins une partie de la surface est en acier laitonné, **caractérisé en ce que** ledit acier laitonné est revêtu d'un polymère selon l'une quelconque des revendications 1 à 11.

## Patentansprüche

1. Polymer mit Urethan- oder Thiourethan-Einheiten, umfassend mindestens einerseits Grundeinheiten mit mindestens einer Einheit der Formel -X₁-C(O)-NH -, in der X₁ für O oder S steht, und andererseits zusätzliche Einheiten, die mindestens einerseits eine sekundäre Alkoholfunktion und andererseits eine Thioetherfunktion in alpha-Position zu dieser Alkoholfunktion umfassen.

2. Polymer nach Anspruch 1, wobei die Grundeinheiten mindestens eine Einheit der Formel (I) umfassen:
-X₁-C(O)-N(H)-Z₁-N(H)-C(O)-X₂-
in der X₂ für O, S oder NH steht und Z₁ für eine mindestens zweiwertigen, aliphatische, cycloaliphatische oder aromatische Verknüpfungsgruppe steht.

3. Polymer nach Anspruch 1 oder 2, wobei die zusätzlichen Einheiten mindestens eine Einheit der Formel (II) umfassen, die ausgewählt ist aus:
(II-1) -CH(OH)-(CH₂)-S-
(II-2) -CH(OH)-(CHR₁)-S-
(II-3) -CH(OH)-(C=R₂)-S-
worin R₁ und R₂ für eine aliphatische, cycloaliphatische oder aromatische Kohlenwasserstoffgruppe stehen.

4. Polymer nach einem der Ansprüche 1 bis 3, wobei X₁ für Sauerstoff steht und wobei X₂ für Sauerstoff oder Schwefel, vorzugsweise Sauerstoff, steht.

5. Polymer nach einem der Ansprüche 3 oder 4, wobei R₁ und R₂ 1 bis 12 Kohlenstoffatome enthalten.

6. Polymer nach Anspruch 5, wobei R₁ für ein Alkyl mit 1 bis 5 Kohlenstoffatomen, vorzugsweise ein Methyl, steht und R₂ für ein Alkyliden mit 1 bis 5 Kohlenstoffen, vorzugsweise ein Methyliden, steht.

7. Polymer nach einem der Ansprüche 2 bis 6, wobei Z₁ für eine aliphatische oder cycloaliphatische Verknüpfungsgruppe, wobei die aliphatische Gruppe 1 bis 30 Kohlenstoffatome enthält und die cycloaliphatische Gruppe 3 bis 30 Kohlenstoffatome enthält, oder eine aromatische Gruppe mit 6 bis 30 Kohlenstoffatomen steht.

8. Polymer nach Anspruch 7, abgeleitet von einem Diisocyanat-Monomer aus der Gruppe bestehend aus den Verbindungen Diphenylmethandiisocyanat (MDI), Toluoldiisocyanat (TDI), Naphthalindiisocyanat (NDI), 3,3'-Bitoluoldiisocyanat (TODI), para-Phenylendiisocyanat (PPDI), Isomeren davon und Mischungen dieser Verbindungen und/oder Isomere, vorzugsweise abgeleitet von einem MDI-Diisocyanat-Monomer.

9. Polymer nach einem der Ansprüche 3 bis 8, wobei die Grundeinheiten mit einer Einheit der Formel (I) und die Einheit der Formel (II) über eine mindestens zweiwertige aliphatische, cycloaliphatische oder aromatische Verknüpfungsgruppe mit der Bezeichnung Z₂ miteinander verbunden sind.

10. Polymer nach Anspruch 9, wobei Z₂ für ein Alkylen mit 1 bis 12 Kohlenstoffatomen, vorzugweise 1 bis 4 Kohlenstoffatomen, steht.

11. Polymer nach einem der Ansprüche 9 oder 10, umfassend eine wiederkehrende Struktureinheit mit mindestens einer Einheit, die einer der Formeln (III-1) bis (III-3) entspricht:
(III-1) -O-C(O)-NH-Z₁-NH-C(O)-O-Z₂- CH(OH)-(CH₂)-S-;
(III-2) - O-C(O)-NH-Z₁-NH-C(O)-O-Z₂- CH(OH)-(CHR₁)-S-;
(III-3) -O-C(O)-NH-Z₁-NH-C(O)-O-Z₂- CH(OH)-(C=R₂)-S-.

12. Verwendung eines Polymers nach einem der Ansprüche 1 bis 11 als Haftprimer zum Verkleben eines Substrats mit mindestens einer Oberfläche, die Glas oder Metall umfasst, mit einem ungesättigten Kautschuk.

13. Verwendung eines Polymers nach einem der Ansprüche 1 bis 11 als Korrosionsschutzbeschichtung für ein Substrat mit einer Oberfläche, die mindestens teilweise metallisch ist.

14. Substrat, das mindestens teilweise mit einem Polymer nach einem der Ansprüche 1 bis 11 beschichtet ist, wobei das Substrat vorzugsweise aus Glas oder Metall besteht.

15. Metallverstärkung, **dadurch gekennzeichnet, dass** sie mit einem Polymer nach einem der Ansprüche 1 bis 11 beschichtet ist.

16. Metalldraht, -kabel, -folie oder -platte nach Anspruch 15, dessen Oberfläche zumindest teilweise aus messingbeschichtetem Stahl besteht, **dadurch gekennzeichnet, dass** der messingbeschichtete Stahl mit einem Polymer nach einem der Ansprüche 1 bis 11 beschichtet ist.

## Claims

1. Polymer having urethane or thiourethane units comprising at least, on the one hand, base units comprising at least a sub-unit of formula -X₁-CO-NH- in which X₁ respectively represents O or S, and, on the other hand, additional units comprising at least, on the one hand, a secondary alcohol function, and, on the other hand, a thioether function in the α position relative to this alcohol function.

2. Polymer according to Claim 1, in which the base units comprise at least a sub-unit of formula (I):
-X₁-C(O)-N(H)-Z₁-N(H)-C(O)-X₂-
in which X₂ represents O, S or NH, and Z₁ represents an at least divalent, aliphatic, cycloaliphatic or aromatic bonding group.

3. Polymer according to Claim 1 or 2, in which the additional units comprise at least a sub-unit of formula (II) selected from:
(II-1) -CH(OH)-(CH₂)-S-
(II-2) -CH(OH)-(CHR₁)-S-
(II-3) -CH(OH)-(C=R₂)-S-
in which R₁ and R₂ represent an aliphatic, cycloaliphatic or aromatic hydrocarbon group.

4. Polymer according to any one of Claims 1 to 3, in which X₁ represents oxygen and in which X₂ represents oxygen or sulphur, preferably oxygen.

5. Polymer according to any one of Claims 3 or 4, in which R₁ and R₂ comprise from 1 to 12 carbon atoms.

6. Polymer according Claim 5, in which R₁ is an alkyl having from 1 to 5 carbon atoms, preferably a methyl, and R₂ is an alkylidene having from 1 to 5 carbon atoms, preferably a methylidene.

7. Polymer according to any one of Claims 2 to 6, in which Z₁ represents an aliphatic or cycloaliphatic bond, the aliphatic group comprising from 1 to 30 carbon atoms and the cycloaliphatic group comprising from 3 to 30 carbon atoms, or an aromatic group comprising from 6 to 30 carbon atoms.

8. Polymer according to Claim 7, derived from a diisocyanate monomer selected from the group consisting of the compounds diphenylmethane diisocyanate (MDI), toluene diisocyanate (TDI), naphthalene diisocyanate (NDI), 3,3'-bitoluene diisocyanate (TODI), para-phenylene diisocyanate (PPDI), their isomers and the mixtures of these compounds and/or isomers, preferably derived from an MDI diisocyanate monomer.

9. Polymer according to any one of Claims 3 to 8, in which the base units containing a sub-unit of formula (I) and the sub-unit of formula (II) are connected to one another by an at least divalent bonding group denoted Z₂, which is aliphatic, cycloaliphatic or aromatic.

10. Polymer according to Claim 9, in which Z₂ is an alkylene comprising from 1 to 12 carbon atoms, preferably from 1 to 4 carbon atoms.

11. Polymer according to any one of Claims 9 or 10, comprising a repeating structural unit which comprises at least one sub-unit corresponding to one of formulae (III-1) to (III-3):
(III-1) -O-C(O)-NH-Z₁-NH-C(O)-O-Z₂-CH(OH)-(CH₂)-S-;
(III-2) -O-C(O)-NH-Z₁-NH-C(O)-O-Z₂-CH(OH)-(CHR)-S-;
(III-3) -O-C(O)-NH-Z₁-NH-C(O)-O-Z₂-CH(OH)-(C=R₂)-S-.

12. Use of a polymer according to any one of Claims 1 to 11, as adhesion primer for the adhesive bonding of a substrate, having at least the surface comprising glass or metal, to an unsaturated rubber.

13. Use of a polymer according to any one of Claims 1 to 11, as corrosion-resistant protective coating for a substrate having at least the surface being at least partially metallic.

14. Substrate coated, at least in part, with a polymer according to any one of Claims 1 to 11, said substrate being preferably made of glass or metal.

15. Metal reinforcer, **characterized in that** it is coated with a polymer according to any one of Claims 1 to 11.

16. Metal wire, cord, film or plate according to Claim 15, at least a portion of the surface of which is made of brass-coated steel, **characterized in that** the said brass-coated steel is coated with a polymer according to any one of Claims 1 to 11.
